# EUROPÄISCHE PATENTSCHRIFT

(11) **EP 2 606 079 B1**
(45) Veröffentlichungstag und Bekanntmachung des Hinweises auf die Patenterteilung: **30.07.2014**
(21) Anmeldenummer: 11745759.8
(22) Anmeldetag: 12.08.2011
(51) Int. Cl.: C08G 18/40, C08G 18/48, C08G 18/58, C08J 5/24

(54) **FASERVERBUNDBAUTEIL UND EIN VERFAHREN ZU DESSEN HERSTELLUNG**
FIBER COMPOSITE COMPONENT AND A PROCESS FOR PRODUCTION THEREOF
ÉLÉMENT COMPOSITE RENFORCÉ PAR DES FIBRES ET SON PROCÉDÉ DE PRODUCTION

(30) Priorität: 16.08.2010 DE 102010039346
(43) Veröffentlichungstag der Anmeldung: 26.06.2013
(73) Patentinhaber: Bayer Intellectual Property GmbH, 40789 Monheim (DE)
(72) Erfinder: LINDNER, Stefan, 50670 Köln (DE); FRANKEN, Klaus, 51467 Bergisch Gladbach (DE); PASSMANN, Dirk, 46145 Oberhausen (DE); NORDMANN, Peter, 41539 Dormagen (DE)
(74) Vertreter: BIP Patents
(86) Internationale Anmeldenummer: PCT/EP2011/063907
(87) Internationale Veröffentlichungsnummer: WO 2012/022683

(56) Entgegenhaltungen:
- WO-A1-2007/064801
- US-A- 4 726 868
- US-A- 5 621 043
- US-B1- 6 420 493

## Beschreibung

Die vorliegende Erfindung betrifft flächige Faserverbundbauteile, die durch Tränken von Fasern mit einer Reaktionsharzmischung aus Polyisocyanaten, Polyepoxiden, Polyolen sowie gegebenenfalls Additiven erhältlich sind, sowie ein Verfahren zu deren Herstellung.

Faserverstärkte Kunststoffe werden als Konstruktionsmaterial verwendet, da diese eine hohe mechanische Festigkeit verbunden mit geringem Gewicht aufweisen. Dabei besteht das Matrixmaterial üblicherweise aus ungesättigten Polyesterharzen, Vinylesterharzen und Epoxidharzen.

DE4416323 beschreibt wärmehärtbare Reaktionsharzgemische, die organische Polyisocyanate, Epoxidgruppen aufweisende organische Verbindungen und Gemische aus bestimmten tertiären Aminen (Katalysatoren) enthalten. Die Reaktionsharzgemische werden bei Temperaturen bis zu 80°C angehärtet und bei Temperaturen von 100 bis 200 °C nachgehärtet. Nachteil bei diesen Reaktionsharzgemischen ist, dass sie erst bei hohen Temperaturen aushärten und lange Zykluszeiten haben, was zu hohen Energie- und Herstellungskosten führt.

WO2008/147641 beschreibt die Herstellung einer ausgehärteten Zusammensetzung, die aus blockierten Isocyanaten, einem Epoxyharz und einem Katalysator hergestellt wird, wobei mindestens ein Oxazolidon- und Isocyanuratring gebildet wird. Die Zusammensetzung kann als Lack oder zur Herstellung von Kompositmaterialien verwendet werden. Nachteilig an dieser Zusammensetzung ist, dass in einem mehrstufigen Prozess erst das Polyurethanprepolymer hergestellt werden muss, das dann zu einem blockierten Prepolymer umgesetzt wird, das als Reaktivharzkomponente eingesetzt werden kann.

US5480958 beschreibt Polyepoxid-Harze, die ein Polyepoxidharz aus einem Polyglycidylether eines Phenols und einem Oxazolidonhärter unter Verwendung eines latenten Härters und Beschleunigers erhalten werden. Die Oxazolidonhärter (Epoxy-terminierten Urethanprepolymere) werden aus einem NCO-terminierten Urethanprepolymer und einem Polyepoxid hergestellt. Das NCO-terminierte Urethanprepolymer wird aus einem Polyisocyanat und einem Polyol hergestellt. Die eingesetzten Epoxy-terminierten Urethane haben Viskositäten von über 400 bis 600 Poise. Die Polyepoxidharze werden bei der Herstellung von Platinen eingesetzt. Nachteilig hierbei ist, dass die eingesetzten Epoxyterminierten Urethane eine hohe Viskosität haben, was die Verarbeitung erschwert.

Das Dokument US 6 420 493 B1 offenbart in Spalte 7, Zeilen 16-24, lösemittelfreie Verbundsysteme, die aus einem Polyol, einem Polyepoxid und einem Polyisocyanat bestehen. In Anspruch 8 von US 6 420 493 B1 wird auch offenbart, dass das Kunststoffsystem mit Fasern verstärkt wird. In Spalte 8, Zeilen 37-40 von US 6 420 493 B1 wird außerdem offenbart, dass die Mischung eine Viskosität im Bereich von 400-20000 mPa.s aufweist.

Faserverbundwerkstoffe können beispielsweise im Flugzeugbau, im Automobilbau oder in Rotorblättern von Windkraftanlagen eingesetzt werden.

Es können die bekannten Verfahren zur Herstellung von Faserverbundbauteilen genutzt werden, wie z.B. Handlaminieren, Spritzpressen, Harzinjektionsverfahren (=Resin Transfer Moulding) oder vakuumunterstützte Infusionsverfahren (beispielsweise VARTM (Vacuum Assisted Resin Transfer Moulding)) oder die Prepregtechnologie.

Die bisherigen Verfahren haben den Nachteil, dass es sehr lange dauert, bis die Reaktivharzmischung ausgehärtet ist, was zu einer geringen Produktivität führt. Zur Erhöhung der Produktivität ist es nötig, die Zykluszeit bei der Herstellung zu verringern. Dabei ist es wichtig, dass das Reaktionsharzgemisch lange dünnflüssig ist, um die Fasern komplett zu tränken. Auf der anderen Seite sollte die Härtezeit möglichst kurz sein, um die Zykluszeit zu verringern. Aus wirtschaftlichen Gründen ist eine niedrige Aushärttemperatur wünschenswert, da sich dadurch Energiekosten sparen lassen.

Aufgabe der vorliegenden Erfindung war es daher, ein Matrixmaterial zur Verfügung zu stellen, das eine gute Tränkung und Benetzung der Fasern ermöglicht und gleichzeitig eine schnelle Aushärtung und gute mechanische Eigenschaften gewährleistet.

Diese Aufgabe konnte überraschenderweise durch Faserverbundbauteile gelöst werden, die aus Faserschichten und einer Reaktionsharzmischung aus Polyisocyanaten, Polyepoxiden, Polyolen sowie gegebenenfalls üblichen Additiven erhältlich sind.

Gegenstand der Erfindung sind flächige Faserverbundbauteile enthaltend eine Faserschicht, die mit Polyurethan getränkt ist, wobei das Polyurethan aus einem Reaktionsgemisch erhältlich ist, das aus
A) einem oder mehreren Polyisocyanaten
B) einem oder mehreren Polyolen
C) einem oder mehreren Polyepoxiden und
D) gegebenenfalls Additiven besteht,
wobei die Mischung bei 35°C eine Viskosität von 50 bis 500 mPas, bevorzugt 70 bis 250 mPas, besonders bevorzugt 70 bis 150 mPas und ein Verhältnis der Anzahl der NCO-Gruppen zu der Anzahl der OH-Gruppen der Komponente B) von 1,3:1 bis 10:1, bevorzugt 1,5:1 bis 3:1, und ein Verhältnis der Anzahl der NCO-Gruppen zu der Anzahl der Epoxidgruppen der Komponente C) von 1,1:1 bis 10:1, bevorzugt 1,2:1 bis 4:1 aufweist.

Das erfindungsgemäß eingesetzte Polyurethan enthält im Prinzip keine Oxazolidinongruppen. Sollten wider Erwarten doch unerwünschte Oxazolidinongruppen im Polyurethan durch untergeordnete Nebenreaktion auftreten, so liegt deren Gehalt unter 1 Gew.-%, bezogen auf Polyurethan. Die Oxazolidinongruppen entstehen, wenn Polyisocyanate mit Epoxiden reagieren.

Die Viskosität wird entsprechend den Angaben im Beispielteil bestimmt.

Das erfindungsgemäße Verbundbauteil weist bevorzugt auf einer Seite der Polyurethan enthaltenden Faserschicht eine sogenannte Distanzmaterialschicht und eine Polyurethan enthaltende Faserschicht auf, die bevorzugt dasselbe Polyurethan wie die erstgenannte Faserschicht aufweist.

Bevorzugte Faserverbundbauteile weisen auf einer Seite der Polyurethan enthaltenden Faserschicht eine oder mehrere Schutz- oder Dekorschichten auf. Bei den Schutzschichten handelt es sich bevorzugt um eine oder mehrere Gelcoatschichten, vorzugsweise aus Polyurethan(PUR)-, Epoxid-, ungesättigten Polyester- oder Vinylesterharzen.

Ein bevorzugtes Faserverbundbauteil weist auf der der Gelcoatschicht gegenüberliegenden Seite der Polyurethan enthaltenden Faserschicht eine sogenannte Distanzschicht auf, worauf eine weitere Polyurethan enthaltende Faserschicht folgt, die bevorzugt dasselbe Polyurethan wie die erstgenannte Faserschicht aufweist.

Beispielsweise besteht die Distanzschicht aus Balsaholz, PVC-Schaum, PET-Schaum oder PUR-Schaum. Die Distanzschicht kann vollflächig oder teilflächig auf der Faserschicht ausgebildet sein. Außerdem kann sie über die Fläche eine unterschiedliche Dicke aufweisen.

Besonders bevorzugt ist ein Faserverbundbauteil, welches in der Faserschicht ein Polyurethan aufweist, das aus 40-60 Gew.-%, bevorzugt 45-55 Gew.-% Polyisocyanaten, 10-45 Gew.-%, bevorzugt 15-40 Gew.-% Polyolen, 10-30 Gew.-%, bevorzugt 15-25 Gew.-% Polyepoxiden und 0-5 Gew.-%, bevorzugt 1-3 Gew.-% Additiven erhältlich ist, wobei die Summe der Gewichtsanteile der Komponenten 100 Gew.-% ergibt.

Der Faseranteil im Faserverbundteil beträgt vorzugsweise mehr als 50 Gew.-%, besonders bevorzugt mehr als 65 Gew.-%, bezogen auf das Gesamtgewicht des Faserverbundbauteils. Der Faseranteil kann bei Glasfasern beispielsweise durch Veraschung nachträglich bestimmt und die Einwaage kontrolliert werden.

Ein weiterer Gegenstand der Erfindung ist ein Verfahren zur Herstellung der erfindungsgemäßen flächigen Faserverbundbauteile, wobei
a) eine Mischung aus
   A) einem oder mehreren Polyisocyanaten
   B) einem oder mehreren Polyolen
   C) einem oder mehreren Polyepoxiden und
   D) gegebenenfalls Additiven
      hergestellt wird, wobei die Mischung bei 35 °C eine Viskosität von 50 bis 500 mPas, bevorzugt 70 bis 250 mPas, besonders bevorzugt 70 bis 150 mPas und ein Verhältnis der Anzahl der NCO-Gruppen zu der Anzahl der OH-Gruppen der Komponente B) von 1,3:1 bis 10:1, bevorzugt 1,5:1 bis 3:1, und ein Verhältnis der Anzahl der NCO-Gruppen zu der Anzahl der Epoxidgruppen der Komponente C) von 1,1:1 bis 10:1, bevorzugt 1,2:1 bis 4:1, aufweist,
b) ein Fasermaterial in einer Werkzeughälfte vorgelegt wird,
c) die unter a) hergestellte Mischung in das Fasermaterial aus b) zur Herstellung eines getränkten Fasermaterials eingebracht wird,
d) das getränkte Fasermaterial bei einer Temperatur von 20 bis 120°C, bevorzugt von 70 bis 90°C, aushärtet.

Vorzugsweise wird die Werkzeughälfte mit einem Trennmittel versehen, bevor das Fasermaterial eingebracht wird. Es können weitere Schutz- oder Dekor-Schichten vor dem Einbringen des Fasermaterials in die Werkzeughälfte eingetragen werden, wie beispielsweise eine oder mehrere Gelcoatschichten.

In einer bevorzugten Ausführungsform wird auf das Fasermaterial, das sich bereits in der Werkzeughälfte befindet, eine sogenannte Distanzschicht und darauf eine weitere Fasermaterialschicht, aus beispielsweise Fasermatten, Fasergewebe oder Fasergelege, aufgebracht. Anschließend wird die Polyurethanmischung in die Schichten gegossen. Die Distanzschicht besteht beispielsweise aus Balsaholz, Polyvinylchlorid(PVC)-Schaum, Polyethylen(PET)-Schaum oder Polyurethan(PUR)-Schaum.

Vorzugsweise wird nach dem Einlegen des Fasermaterials in die Werkzeughälfte eine Folie auf das Fasermaterial gelegt, Vakuum zwischen der Folie und der Werkzeughälfte erzeugt und durch die Folie die Reaktionsmischung eingetragen (Vacuum Assisted Resin Transfer Molding (VARTM)). Durch dieses Verfahren lassen sich auch große Bauteile wie Rotorblätter von Windkraftanlagen herstellen. Falls erforderlich können zwischen der Folie und dem Fasermaterial noch sogenannte Fließhilfen (z.B. in Form von druckstabilen, aber harzdurchlässigen Matten) eingebracht werden, die nach der Aushärtung wieder entfernt werden können.

Beim ebenfalls bevorzugten RTM-Verfahren (Resin Transfer Molding) wird anstelle der vakuumfesten Folie mit einem Werkzeuggegenstück die Form geschlossen und die Harzmischung gegebenenfalls unter Druck in die Form gegeben.

Die erfindungsgemäß eingesetzten Reaktionsharzmischungen haben niedrige Viskositäten, lange Verarbeitungszeiten und weisen kurze Aushärtezeiten bei niedrigen Aushärtetemperaturen auf und ermöglichen so die schnelle Fertigung von Faserverbundbauteilen.

Ein weiterer Vorteil der erfindungsgemäß eingesetzten Reaktionsharzmischungen ist das verbesserte Verarbeitungsverhalten durch eine schnelle Verträglichkeit der Mischung aus Polyol und Polyepoxid mit dem Polyisocyanat. Bei den bisher verwendeten unkatalysierten Systemen aus Polyisocyanat und Polyolen müssen die Komponenten vorab für mehrere Minuten vermischt werden, da erst durch die beginnende Urethanbildung eine Verträglichkeit der Komponenten und eine Homogenität der Mischung erreicht wird, die für die Verarbeitung notwendig ist, da es ansonsten zu unvollständiger Härtung oder zu inhomogenen Produkten kommt. Die Komponenten der Reaktionsharzmischungen können bei 20 bis 50 °C, bevorzugt bei 30 bis 40 °C, gemischt und auf das Fasermaterial aufgetragen werden.

Die erfindungsgemäß eingesetzte Reaktionsmischung kann auf Gießmaschinen mit Statikmischern oder mit dynamischen Mischern verarbeitet werden, da nur eine kurze Mischzeit benötigt wird. Dies ist bei der Herstellung der erfindungsgemäßen Faserverbundbauteile von großem Vorteil, da die Reaktivharzmischung für eine gute Tränkung möglichst dünnflüssig sein muss. Eine Mischung, die erst vorab für einige Minuten vermischt werden muß, zeigt durch die Bildung von Urethangruppen bereits eine zu hohe Viskosität.

Ein weiterer Vorteil ist, dass durch die Verwendung von Polyepoxiden in Kombination mit Polyisocyanaten und Polyolen die Anbindung der Reaktionsharzmischung an die Fasern, insbesondere Glasfasern deutlich verbessert ist. Diese Anbindung der Fasern an das Matrixmaterial (beschrieben durch die Messgröße "interlaminare Scherfestigkeit") trägt entscheidend zu den mechanischen Eigenschaften des Faserverbundbauteiles bei. Daher ist diese interlaminare Scherfestigkeit eine entscheidende Größe für den Verbund aus Fasermaterial und Matrixmaterial.

Ein weiterer Vorteil der erfindungsgemäß eingesetzten Reaktionsmischung ist, dass sie in einem einstufigen Prozess verarbeitet werden kann und eine niedrige Aushärtungstemperatur von unter 120 °C ausreichend ist.

Als Polyisocyanatkomponente A) kommen die üblichen aliphatischen, cycloaliphatischen und insbesondere aromatischen Di- und/oder Polyisocyanate zum Einsatz. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (pMDI), 1,3- und/oder 1,4-Bis-(2-isocyanato-prop-2-yl)-benzol (TMXDI), 1,3-Bis-(isocyanatomethyl)benzol (XDI). Neben den vorstehend genannten Polyisocyanaten können anteilig auch modifizierte Polyisocyanate mit Uretdion-, Isocyanurat-, Urethan-, Carbodiimid-, Uretonimin-, Allophanat- oder Biuretstruktur eingesetzt werden. Als Isocyanat wird vorzugsweise Diphenylmethandiisocyanat (MDI) und insbesondere Gemische aus Diphenylmethandiisocyanat und Polyphenylenpolymethylenpolyisocyanat (pMDI) verwendet. Die Gemische aus Diphenylmethandiisocyanat und Polyphenylenpolymethylenpolyisocyanat (pMDI) haben einen bevorzugten Monomergehalt von zwischen 60 und 100 Gew.-%, bevorzugt zwischen 70 und 95 Gew.-%, besonders bevorzugt zwischen 80 und 90 Gew.-%. Der NCO-Gehalt des verwendeten Polyisocyanates sollte vorzugsweise über 25 Gew.-%, bevorzugt über 30 Gew.-%, besonders bevorzugt über 32 Gew.% liegen. Die Viskosität des Isocyanates sollte vorzugsweise ≤ 150 mPas (bei 25°C), bevorzugt ≤ 50 mPas (bei 25°C) und besonders bevorzugt von ≤ 30 mPas (bei 25°C) sein.

Die Polyole B) können beispielsweise ein zahlenmittleres Molekulargewicht Mₙ von ≥ 62 g/mol bis ≤ 8000 g/mol, bevorzugt von ≥ 90 g/mol bis ≤ 5000 g/mol und besonders bevorzugt von ≥ 92 g/mol bis ≤ 1000 g/mol aufweisen. Die OH-Zahl der Komponente B) gibt im Falle eines einzelnen zugesetzten Polyols dessen OH-Zahl an. Im Falle von Mischungen wird die zahlenmittlere OH-Zahl angegeben. Dieser Wert kann anhand von DIN 53240 bestimmt werden. Die Polyolformulierung enthält vorzugsweise als Polyole solche, die eine zahlenmittlere OH-Zahl von 200 bis 1830 mg KOH/g, bevorzugt von 300 bis 1000 mg KOH/g und besonders bevorzugt von 350 bis 500 mg KOH/g aufweisen. Die Viskosität der Polyole ist vorzugsweise ≤ 800 mPas (bei 25°C). Vorzugsweise haben die Polyole mindestens 60 % sekundäre OH-Gruppen, bevorzugt mindestens 80 % sekundäre OH-Gruppen und besonders bevorzugt 90 % sekundäre OH-Gruppen. Polyetherpolyole auf Basis Propylenoxid sind besonders bevorzugt. Bevorzugt haben die eingesetzten Polyole eine mittlere Funktionalität von 2,0 bis 4,0, besonders bevorzugt 2,5 bis 3,5.

Erfindungsgemäß können Polyetherpolyole, Polyesterpolyole oder Polycarbonatpolyole eingesetzt werden, bevorzugt sind Polyetherpolyole. Erfindungsgemäß verwendbare Polyetherpolyole sind beispielsweise Polytetramethylenglykolpolyether, wie sie durch Polymerisation von Tetrahydrofuran mittels kationischer Ringöffnung erhältlich sind. Ebenfalls geeignete Polyetherpolyole sind Additionsprodukte von Styroloxid, Ethylenoxid, Propylenoxid und/oder Butylenoxide an di- oder polyfunktionelle Startermoleküle. Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren oder Hydroxylgruppen aufweisende Öle. Die Viskosität der Polyole ist vorzugsweise ≤ 800 mPas (bei 25°C). Vorzugsweise haben die Polyole mindestens 60 % sekundäre OH-Gruppen, bevorzugt mindestens 80 % sekundäre OH-Gruppen und besonders bevorzugt 90 % sekundäre OH-Gruppen. Polyetherpolyole auf Basis Propylenoxid sind besonders bevorzugt.

Die Polyole B) können auch Fasern, Füllstoffe und Polymere enthalten.

Als Polyepoxide C) sind niedrigviskose aliphatische, cycloaliphatische oder aromatische Epoxide sowie deren Mischungen besonders gut geeignet. Die Polyepoxide können durch Umsetzung von Epoxiden, beispielsweise Epichlorhydrin, mit Alkoholen dargestellt werden. Als Alkohole können beispielsweise Bisphenol A, Bisphenol F, Bisphenol S, Cyclohexandimethanol, Phenol-Formaldehyd-Harze, Kresol-Formaldehyd-Novolake, Butandiol, Hexandiol, Trimethylolpropan oder Polyetherpolyole eingesetzt werden. Es können auch Glycidylester, beispielsweise von Phthalsäure, Isophthalsäure oder Terephthalsäure sowie deren Mischungen eingesetzt werden. Epoxide können auch durch die Epoxidierung von Doppelbindungen enthaltenden organischen Verbindungen hergestellt werden, beispielsweise durch die Epoxidierung von fetten Ölen, wie Sojaöl, zu epoxidiertem Sojaöl. Die Polyepoxide können auch monofunktionelle Epoxide als Reaktivverdünner enthalten. Diese können durch die Reaktion von Alkoholen mit Epichlorhydrin hergestellt werden, beispielsweise Monoglycidylether von C4-C18 Alkoholen, Cresol, p-tert.-Butylpenol. Weitere einsetzbare Polyepoxide sind beispielsweise in "Handbook of Epoxy resins" von Henry Lee und Kris Neville, McGraw-Hill Book Company, 1967, beschrieben. Bevorzugt werden Glycidylether von Bisphenol A eingesetzt, die ein Epoxidäquivalentgewicht im Bereich von 170 - 250 g/eq, besonders bevorzugt mit einem Epoxidäquivalentgewicht im Bereich von 176 bis 196 g/eq haben. Der Epoxidquivalentwert kann nach ASTM D-1652 bestimmt werden. Beispielsweise kann hierfür das Eurepox 710 oder das Araldite® GY-250 eingesetzt werden.

Gegebenenfalls können Additive D) zugesetzt werden. Hierbei handelt es sich beispielsweise um Katalysatoren, Entlüfter, Entschäumer, Füllstoffe und Verstärkungsstoffe. Weitere bekannte Additive und Zusatzmittel können bei Bedarf verwendet werden. Besonders bevorzugt sind latente Katalysatoren, die erst bei 50 bis 100°C katalytisch aktiv sind.

Als Fasermaterial können beschlichtete oder unbeschlichtete Fasern, beispielsweise Glasfasern, Kohlefasern, Stahl- bzw. Eisenfasern, Naturfasern, Aramidfasern, Polyethylenfasern, Basaltfasern oder Carbon Nanotubes (CNTs) eingesetzt werden. Besonders bevorzugt sind Glasfasern. Die Fasern können als Kurzfasern mit einer Länge von 0,4 bis 50 mm verwendet werden. Bevorzugt sind endlosfaserverstärkte Verbundbauteile durch den Einsatz von kontinuierlichen Fasern. Die Fasern in der Faserschicht können unidirektional, regellos verteilt oder verwoben angeordnet sein. In Bauteilen mit einer Faserschicht aus mehreren Lagen besteht die Möglichkeit der Faserorientierung von Lage zu Lage. Hierbei kann man unidirektionale Faserschichten, Kreuzverbundschichten oder multidirektionale Faserschichten herstellen, wobei unidirektionale oder verwebte Lagen übereinander geschichtet werden. Besonders bevorzugt werden Faser-Halbzeuge als Fasermaterial, wie beispielsweise Gewebe, Gelege, Geflechte, Matten, Vliese, Gestricke und Gewirke oder 3D-Faser-Halbzeuge, eingesetzt.

Die erfindungsgemäßen Faserverbundbauteile können zur Herstellung von Rotorblättern von Windkraftanlagen, zur Herstellung von Karosseriebauteilen von Automobilen oder im Flugzeugbau, in Bauteilen des Gebäude- bzw. Straßenbaus (z.B. Kanaldeckel) und sonstigen hochbelasteten Strukturen verwendet werden.

Die Erfindung soll anhand der nachfolgenden Beispiele näher erläutert werden.

### Beispiele

Es wurden faserverstärkte Formkörper aus den erfindungsgemäßen Polyurethansystemen aus Polyisocyanaten, Polyolen und Polyepoxiden hergestellt und mit einem Polyurethansystem aus Polyisocyanat und Polyol verglichen. Für die Herstellung des faserverstärkten Formkörpers duch Vakuuminfusion wurde ein Teflonrohr mit einem Durchmesser von 6 mm mit Glasfaserrovings (Vetrotex^{®} EC2400 P207) gefüllt, so dass ein Glasfasergehalt von ca. 65 Gewichts-%, bezogen auf das spätere Bauteil, erreicht wurde. Die eine Seite des Teflonrohres wurde in die Reaktionsmischung getaucht und an der anderen Seite wurde mit einer Ölpumpe Vakuum gezogen und die Reaktionsmischung dadurch eingesogen. Nachdem die Rohre befüllt waren, wurden sie bei 80 °C über Nacht getempert. Das Teflonrohr wurde entfernt. An den faserverstärkten Probenkörpern wurden die mechanischen Messungen vorgenommen. Der Glasfasergehalt wurde durch Veraschung der Probenkörper nach DIN EN ISO 1172 bestimmt.Die Biegefestigkeit und Biegedehnung wurde mit einem 3-Punkt-Biegeversuch nach ISO 3597-2 bestimmt.

Die Viskosität wurde direkt nach dem Vermischen und 60 Minuten nach dem Vermischen der Komponenten mit einem Rotationsviskosimeter bei 35°C mit einer Scherrate von 60 1/s bestimmt.

Das NCO/OH Äquivalentverhältnis gibt das Verhältnis der Anzahl der NCO-Gruppen in der Polyisocyanatkomponente A) zu der Anzahl der OH-Gruppen in der Polyolkomponente B) an.

Das NCO/EP Äquivalentverhältnis gibt das Verhältnis der Anzahl der NCO-Gruppen in der Polyisocyanatkomponente A) zu der Anzahl der Epoxid-Gruppen in der Polyepoxidkomponente C) an.

### Beispiel 1:

48 g eines Polyetherpolyols mit einer OH-Zahl von 380 mg KOH/g und einer Funktionalität von 3 (Viskosität bei 25 °C: 600 ± 50 mPas; Trimethylolpropan als Starter; Propylenoxidbasis) wurden mit 12 g Eurepox^{®} 710 (Bisphenol A Epichlorhydrinharz mit durchschnittlichem Molekulargewicht ≤ 700 g/mol; Epoxidäquivalent 183-189 g/eq; Viskosität bei 25 °C: 10000-12000 mPas) vermischt und für 60 Minuten bei einem Druck von 1 mbar entgast. Danach wurden 55,76 g Desmodur^{®} VP.PU 60RE11 (Polyisocyanat der Firma Bayer MaterialScience AG; Gemisch von Diphenylmethandiisocyanat und Polyphenylenpolymethylenpolyisocyanat; NCO-Gehalt 32,6 Gew.-%; Viskosität bei 25 °C: 20 mPas) zugegeben und unter Rühren für 5 Minuten bei 1 mbar entgast. Danach wurde mit der Reaktionsmischung ein faserverstärkter Formkörper durch Vakuuminfusion hergestellt.

### Beispiel 2:

30 g eines Polyetherpolyols mit einer OH-Zahl von 380 mg KOH/g und einer Funktionalität von 3 (Viskosität bei 25 °C: 600 ± 50 mPas; Trimethylolpropan als Starter; Propylenoxidbasis) wurden mit 30 g Eurepox^{®} 710 (Bisphenol A Epichlorhydrinharz mit durchschnittlichen Molekulargewicht ≤ 700 g/mol; Epoxidäquivalent 183-189 g/eq; Viskosität bei 25 °C: 10000-12000 mPas) vermischt und für 60 Minuten bei einem Druck von 1 mbar entgast. Danach wurden 53,03 g Desmodur^{®} VP.PU 60RE11 (Polyisocyanat der Firma Bayer MaterialScience AG; Gemisch von Diphenylmethandiisocyanat und Polyphenylenpolymethylenpolyisocyanat; NCO-Gehalt 32,6 Gew.-%; Viskosität bei 25 °C: 20 mPas) zugegeben und unter Rühren für 5 Minuten bei 1 mbar entgast. Danach wurde mit der Reaktionsmischung ein faserverstärkter Formkörper durch Vakuuminfusion hergestellt.

### Vergleichsbeispiel 3:

60,7 g eines Polyetherpolyols mit einer OH-Zahl von 380 mg KOH/g und einer Funktionalität von 3 (Viskosität bei 25 °C: 600 ± 50 mPas; Trimethylolpropan als Starter; Propylenoxidbasis) wurden für 60 Minuten bei einem Druck von 1 mbar entgast. Danach wurden 58,25 g Desmodur^{®} VP.PU 60RE11 (Polyisocyanat der Firma Bayer MaterialScience AG; Gemisch von Diphenylmethandiisocyanat und Polyphenylenpolymethylenpolyisocyanat; NCO-Gehalt 32,6 Gew.-%; Viskosität bei 25 °C: 20 mPas) zugegeben und unter Rühren für 5 Minuten bei 1 mbar entgast. Danach wurde mit der Reaktionsmischung ein faserverstärkter Formkörper durch Vakuuminfusion hergestellt.

| **Beispiele** | **1** | **2** | **3*** |
|---|---|---|---|
| NCO/OH Äquivalentverhältnis | 1,33 | 2,03 | 1,1 |
| NCO/Epoxid Äquivalentverhältnis | 3,22 | 1,22 | 0 |
| Viskosität (direkt nach dem Vermischen) [mPas] | 84 | 95 | 74 |
| Viskosität (60 min nach dem Vermischen) [mPas] | 4980 | 2070 | 7190 |
| Mischzeit bei 40 °C [sec.] | 20 | 20 | 45 |
| Glasfasergehalt [Gewichts-%] | 64,3 | 63,0 | 65,1 |
| Biegefestigkeit [MPa] nach ISO 3597-2 | 837,7 | 862,1 | 823,9 |
| Biegedehnung [%] nach ISO 3597-2 | 2,80 | 3,04 | 2,69 |
| Interlaminare Scherfestigkeit (ShortBeam) [MPa] nach ISO 3597-4 | 43,66 | 44,13 | 42,22 |

| | | | |
|---|---|---|---|
| ***Vergleich** | | | |

## Patentansprüche

1. Flächige Faserverbundbauteile enthaltend eine Faserschicht, die mit Polyurethan getränkt ist, wobei das Polyurethan aus einem Reaktionsgemisch erhältlich ist, das aus
A) einem oder mehreren Polyisocyanaten
B) einem oder mehreren Polyolen
C) einem oder mehreren Polyepoxiden und
D) gegebenenfalls Additiven besteht,
wobei die Mischung bei 35°C eine Viskosität von 50 bis 500 mPas, bestimmt mit einem Rotationsviskosimeter bei 35°C mit einer Scherrate von 60 l/s, und ein Verhältnis der Anzahl der NCO-Gruppen zu der Anzahl der OH-Gruppen der Komponente B) von 1,3:1 bis 10:1 und ein Verhältnis der Anzahl der NCO-Gruppen zu der Anzahl der Epoxidgruppen der Komponente C) von 1,1:1 bis 10:1 aufweist:

2. Flächiges Faserverbundbauteil gemäß Anspruch 1, wobei auf einer Seite der Polyurethan enthaltenden Faserschicht eine oder mehrere Gelcoatschichten vorhanden sind.

3. Flächiges Faserverbundbauteil gemäß Anspruch 2, wobei auf der der Gelcoatschicht gegenüberliegenden Seite der Polyurethan enthaltenden Faserschicht eine Distanzschicht vorhanden ist, worauf eine weitere Polyurethan enthaltende Faserschicht folgt.

4. Flächiges Faserverbundbauteil gemäß Anspruch 1, wobei auf einer Seite der Polyurethan enthaltenden Faserschicht eine Distanzschicht vorhanden ist, worauf eine weitere Polyurethan enthaltende Faserschicht folgt.

5. Verfahren zur Herstellung der flächigen Faserverbundbauteile gemäß Anspruch 1, wobei
a) eine Mischung aus
A) einem oder mehreren Polyisocyanaten
B) einem oder mehreren Polyolen
C) einem oder mehreren Polyepoxiden und
D) gegebenenfalls Additiven,
hergestellt wird, wobei die Mischung bei 35°C eine Viskosität von 50 bis 500 mPas und ein Verhältnis der Anzahl der NCO-Gruppen zu der Anzahl der OH-Gruppen der Komponente B) von 1,3:1 bis 10:1 und ein Verhältnis der Anzahl der NCO-Gruppen zu der Anzahl der Epoxidgruppen der Komponente C) von 1,1:1 bis 10:1 aufweist,
b) ein Fasermaterial in einer Werkzeughälfte vorgelegt wird,
c) die unter a) hergestellte Mischung in das Fasermaterial aus b) zur Herstellung eines getränkten Fasermaterials eingebracht wird,
d) das getränkte Fasermaterial bei einer Temperatur von 20 bis 120°C, bevorzugt von 70 bis 90°C, aushärtet.

6. Verfahren gemäß Anspruch 5, wobei vor dem Schritt b)
b') eine oder mehrere Gelcoatschichten in die Werkzeughälfte eingebracht werden.

7. Verfahren gemäß Anspruch 5, wobei nach dem Schritt b) und vor dem Schritt c) in die Werkzeughälfte eine Distanzmaterialschicht und danach eine Fasermaterialschicht eingebracht werden.

8. Verwendung der flächigen Faserverbundbauteile gemäß einem der Ansprüche 1 bis 4 zur Herstellung von Rotorblättern von Windkraftanlagen, zur Herstellung von Karosseriebauteilen von Automobilen oder im Flugzeugbau, in Bauteilen des Gebäude- bzw. Straßenbaus' (z.B. Kanaldeckel) und sonstigen hochbelasteten Strukturen.

## Claims

1. Sheet-form fibre composite components comprising a fibre layer impregnated with polyurethane, wherein the polyurethane is obtainable from a reaction mixture comprising
A) one or more polyisocyanates,
B) one or more polyols,
C) one or more polyepoxides, and
D) optionally additives,
wherein the mixture at 35°C has a viscosity of from 50 to 500 mPas, determined with a rotary viscometer at 35°C with shear rate 60 sec⁻¹, and a ratio of the number of NCO groups to the number of OH groups of component B) of from 1.3:1 to 10:1 and a ratio of the number of NCO groups to the number of epoxide groups of component C) of from 1.1:1 to 10:1.

2. Sheet-form fibre composite component according to Claim 1, wherein one or more gelcoat layers are present on one side of the polyurethane-containing fibre layer.

3. Sheet-form fibre composite component according to Claim 2, wherein a spacer layer is present on the side of the polyurethane-containing fibre layer that is remote from the gelcoat layer, which spacer layer is followed by a further polyurethane-containing fibre layer.

4. Sheet-form fibre composite component according to Claim 1, wherein a spacer layer is present on one side of the polyurethane-containing fibre layer, which spacer layer is followed by a further polyurethane-containing fibre layer.

5. Process for the production of the sheet-form fibre composite components according to Claim 1, wherein
a) a mixture of
A) one or more polyisocyanates,
B) one or more polyols,
C) one or more polyepoxides, and
D) optionally additives
is prepared, wherein the mixture at 35°C has a viscosity of from 50 to 500 mPas and a ratio of the number of NCO groups to the number of OH groups of component B) of from 1.3:1 to 10:1 and a ratio of the number of NCO groups to the number of epoxide groups of component C) of from 1.1:1 to 10:1,
b) a fibre material is laid in a mould half,
c) the mixture prepared under a) is introduced into the fibre material from b) in order to produce an impregnated fibre material,
d) the impregnated fibre material cures at a temperature of from 20 to 120°C, preferably from 70 to 90°C.

6. Process according to Claim 5, wherein before step b)
b') one or more gelcoat layers are introduced into the mould half.

7. Process according to Claim 5, wherein after step b) and before step c) a spacer material layer and then a fibre material layer are introduced into the mould half.

8. Use of the sheet-form fibre composite components according to any one of Claims 1 to 4 in the production of rotor blades for wind turbines, in the production of bodywork components for motor vehicles or in aircraft building, in components for the construction of buildings and roads (e.g. manhole covers) and other structures which are subjected to high stresses.

## Revendications

1. Elément composite plat renforcé par des fibres, contenant une couche de fibres qui est imprégnée de polyuréthane, dans lequel le polyuréthane peut être obtenu à partir d'un mélange de réaction composé de
A) un ou plusieurs polyisocyanate(s)
B) un ou plusieurs polyol(s)
C) un ou plusieurs polyépoxydes, et
D) éventuellement des additifs,
dans lequel le mélange présente à 35°C une viscosité de 50 à 500 mPas, déterminée avec un viscosimètre à rotation à 35°C avec un taux de cisaillement de 60 1/s, et un rapport du nombre des groupes NCO au nombre des groupes OH du composant B) de 1,3:1 à 10:1 et un rapport du nombre des groupes NCO au nombre des groupes époxydes du composant C) de 1,1:1 à 10:1.

2. Elément composite plat renforcé par des fibres selon la revendication 1, dans lequel il se trouve une ou plusieurs couches de gelcoat sur un côté de la couche de fibres contenant du polyuréthane.

3. Elément composite plat contenant des fibres selon la revendication 2, dans lequel il se trouve, sur le côté de la couche de fibres contenant du polyuréthane opposé à la couche de gelcoat, une couche d'écartement qui est suivie d'une autre couche de fibres contenant du polyuréthane.

4. Elément composite plat renforcé par des fibres selon la revendication 1, dans lequel il se trouve, sur un côté de la couche de fibres contenant du polyuréthane, une couche d'écartement, qui est suivie d'une autre couche de fibres contenant du polyuréthane.

5. Procédé de fabrication de l'élément composite plat renforcé par des fibres selon la revendication 1, dans lequel
a) on prépare un mélange composé de
A) un ou plusieurs polyisocyanate(s)
B) un ou plusieurs polyol(s)
C) un ou plusieurs polyépoxydes, et
D) éventuellement des additifs,
dans lequel le mélange présente à 35°C une viscosité de 50 à 500 mPas et un rapport du nombre des groupes NCO au nombre des groupes OH du composant B) de 1,3:1 à 10:1 et un rapport du nombre des groupes NCO au nombre des groupes époxydes du composant C) de 1,1:1 à 10:1,
b) on dispose un matériau de fibres dans une moitié d'outil,
c) on introduit le mélange préparé sous a) dans le matériau de fibres de b) pour la production d'un matériau de fibres imprégné,
d) on durcit le matériau de fibres imprégné à une température de 20 à 120°C, de préférence de 70 à 90°C.

6. Procédé selon la revendication 5, dans lequel, avant l'étape b),
b') on introduit une ou plusieurs couches de gelcoat dans la moitié d'outil.

7. Procédé selon la revendication 5, dans lequel, après l'étape b) et avant l'étape c), on introduit une couche de matériau d'écartement et ensuite une couche de matériau de fibres dans la moitié d'outil.

8. Utilisation de l'élément composite plat renforcé par des fibres selon l'une quelconque des revendications 1 à 4 pour la fabrication de pales de rotor d'éoliennes, pour la fabrication d'éléments de carrosserie d'automobiles ou dans la construction aéronautique, dans des éléments de construction de bâtiments ou de routes (par exemple des couvercles de canaux) et d'autres structures fortement sollicitées.
